Europäisches Patentamt

European Patent Office

Office européen des brevets

(11) Veröffentlichungsnummer : **0 019 735**
**B1**

(12) **EUROPÄISCHE PATENTSCHRIFT**

(45) Veröffentlichungstag der Patentschrift :
11.05.83

(21) Anmeldenummer : 80102335.9

(22) Anmeldetag : 30.04.80

(51) Int. Cl.³ : **H 04 N   9/53**

(54) **Verfahren und Schaltung zur Kontrastkorrektur von Farbfernsehsignalen.**

(30) Priorität : 25.05.79 DE 2921246

(43) Veröffentlichungstag der Anmeldung :
10.12.80 Patentblatt 80/25

(45) Bekanntmachung des Hinweises auf die Patenterteilung : 11.05.83 Patentblatt 83/19

(84) Benannte Vertragsstaaten :
AT BE CH DE FR GB IT LI NL

(56) Entgegenhaltungen :
DE A 2 348 588
DE A 2 649 781
US A 3 684 825

(73) Patentinhaber : **ROBERT BOSCH GMBH**
**Robert-Bosch-Strasse 7**
**D-6100 Darmstadt (DE)**

(72) Erfinder : **Hess, Heinz**
**Baumgartenstrasse 24**
**D-6108 Weiterstadt 1 (DE)**.
Erfinder : **Kirschenstein, Reinhard**
**Schwanengasse 12**
**D-6101 Rossdorf 1 (DE)**

(74) Vertreter : **Gornott, Dietmar, Dipl.-Ing.**
**c/o Robert-Bosch GmbH Postfach 429**
**Robert-Bosch-Strasse 7**
**D-6100 Darmstadt (DE)**

Verfahren und Schaltung zur Kontrastkorrektur von Farbfernsehsignalen

### Stand der Technik

Die Erfindung geht aus von einem Verfahren nach der Gattung des Hauptanspruchs.

Die elektronischen Bildwandler, Aufnahmeröhren und Bildwiedergaberöhren, können wegen ihres eingeschränkten Kontrastumfanges in der Größenordnung 60 : 1 oftmals den von einer Bildvorlage, natürlichen Szene, Diapositiv etc. vorgegebenen Kontrastumfang in der Größenordnung von mehreren 100 : 1 nicht verarbeiten. In diesem Falle wird die Übertragungskennlinie neben der vorgenommenen Gamma-Entzerrung einer zusätzlichen Kontrastkorrektur unterzogen.

Aus der DE-AS 26 49 781 ist schon eine Vorrichtung zur Kontrastkorrektur für ein Farbfernsehsystem mit mehreren Bildaufnahmeröhren bekannt, welche durch Verwendung von zwei Multiplizierern jedoch relativ aufwendig ist. Außerdem wird hierbei der Kontrast über den gesamten Amplitudenbereich, also bei dunkleren ebenso wie bei helleren Bildteilen, gleichmäßig verändert.

Durch die US-PS 3 684 825 ist weiterhin eine Kontrastkompressionsschaltung bekannt, wobei das codierte Farbvideosignal direkt mit einem Intensitätssignal multipliziert wird, welches keiner zusätzlichen Schwarzdehnung unterworfen wurde. Diese Multiplikation führt somit lediglich zu einer quadratischen Übertragungskennlinie, und die RGB-Signale sind dabei nicht gammakorrigiert. Diese direkte Multiplikation mit einem relativ großen Multiplikationsfaktor führt unvermeidlich zu einer gewissen Signalverzerrung, was insbesondere bei genormten Fernsehsignalen sehr nachteilig ist. Außerdem ist hierbei nicht gewährleistet, daß die eine Kompression bewirkende Änderung der Kontrastcharakteristik nur zwischen dem Schwarz- und dem Weißpegel zur Wirkung kommt, diese Signalpegel selbst aber unverändert läßt.

Ferner ist aus der DE-OS 23 48 588 eine Einrichtung zur Gamma-Korrektur von Farbfernseh-Übertragungsanlagen bekannt, wobei die den dunklen Bildpartien entsprechenden Videosignale gedehnt werden. Diese Gamma-Korrektur findet jedoch in jedem Primärfarbkanal einzeln statt. Mit jeder dieser Korrekturschaltungen kann zwar das Kontrastverhältnis einer Szene durch Anhebung des niedrigsten Helligkeitswertes des Bildes gegenüber den höheren Helligkeitswerten verringert werden, da diese Gamma-Korrekturschaltungen jedoch durch die Farbkontraste jeder einzelnen Farbe gesteuert werden und nicht gleichsinnig und synchron miteinander arbeiten, würden Einstellungen an ihnen die Sättigung und den Farbwert der Farben nachteilig beeinflussen.

Der Erfindung liegt daher die Aufgabe zugrunde, ein Verfahren zur Kontrastkorrektur von Farbfernsehsignalen anzugeben, mit welchem eine Schwarzdehnung in den dunkleren Bildbereichen ohne Sättigungsänderungen des Gesamtsignals erreicht wird.

### Vorteile der Erfindung

Das erfindungsgemäße Verfahren mit den kennzeichnenden Merkmalen des Hauptanspruchs hat demgegenüber den Vorteil, daß es durch Verwendung nur einer Multiplizierstufe weniger aufwendig ist. Außerdem ist es vorteilhaft, daß der Kontrast in den dunkleren Bildteilen besonders verstärkt korrigiert wird.

Durch die in den Unteransprüchen aufgeführten Maßnahmen sind vorteilhafte Weiterbildungen und Verbesserungen des im Hauptanspruch angegebenen Verfahrens möglich.

### Zeichnung

Ausführungsbeispiele der Erfindung sind in der Zeichnung dargestellt und in der nachfolgenden Beschreibung näher erläutert.

Es zeigen :

Figur 1 ein Blockschaltbild der erfindungsgemäßen Schaltung für das PAL- bzw. NTSC-System,

Figur 2 ein Blockschaltbild der erfindungsgemäßen Schaltung für das SECAM-System,

Figur 3 einige der in den Figuren 1 und 2 vorkommende Signale,

Figur 4 ein Teilschaltbild zur Erzeugung des Korrektursignals im Detail.

### Beschreibung der Erfindung

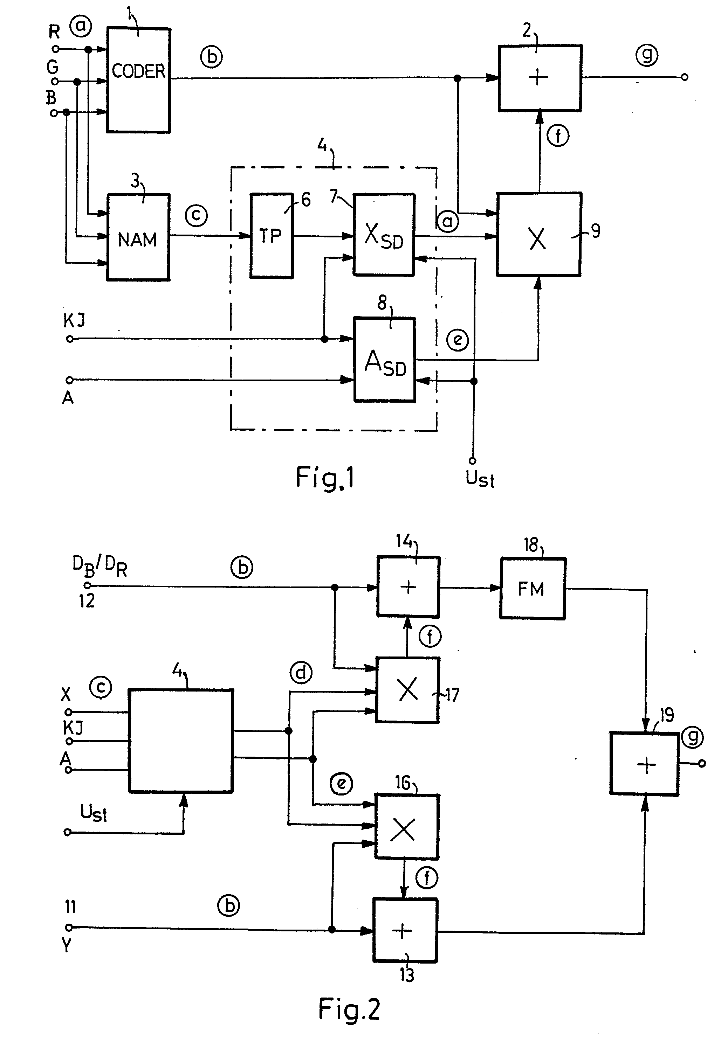

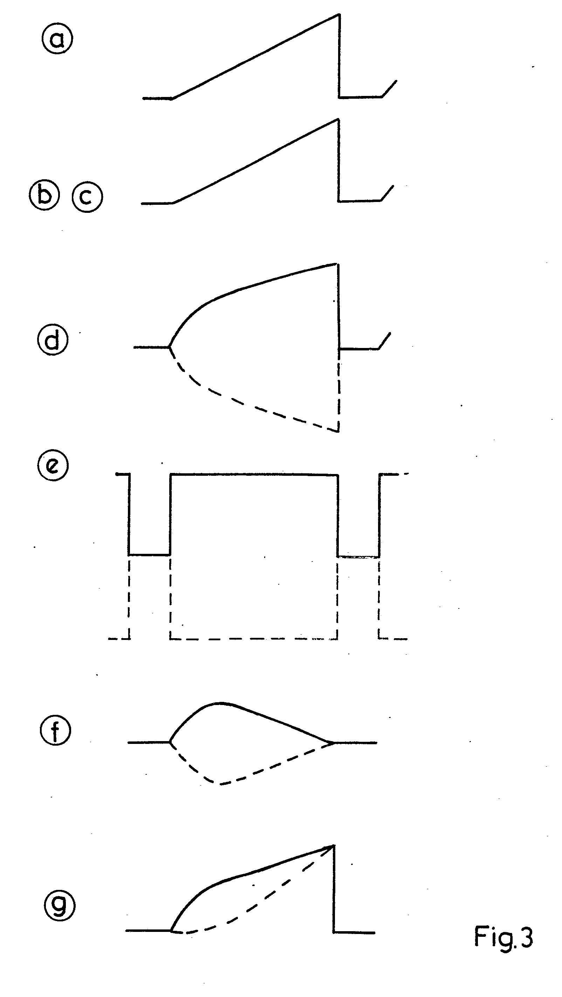

In Fig. 1 werden die Farbauszugssignale R, G, B, welche von einer in der Fig. nicht dargestellten Bildsignalquelle erzeugt werden, einem Coder 1 zugeführt, welcher entsprechend einer vorgegebenen Fernsehnorm, beispielsweise PAL oder NTSC, ein zusammengesetztes unkorrigiertes Farbsignal erzeugt. Dieses Farbsignal wird dem ersten Eingang einer Addierstufe 2 zugeführt. Die Farbauszugssignale werden außerdem einer Nicht-Additiven-Mischschaltung 3 zugeleitet, an deren Ausgang ein jeweils der größten Helligkeit entsprechendes Signal abnehmbar ist. Die den Schaltungen 1, 2 und 3 zugeführten Signale sind in Fig. 3 mit a und b und das am Ausgang der Schaltung 3 abnehmbare Signal mit c bezeichnet. Es sind hierbei beispielsweise sägezahnförmige Signale verwendet. Das Ausgangssignal der Schaltung 3 wird nun einer Signalverarbeitungsschaltung 4 zugeführt, welche ein Tiefpaßglied 6 und je eine nichtlineare Verstärkerschaltung 7 und 8 enthält. Das Tiefpaßglied 6 läßt nur Signale des unteren Frequenzbereiches durch, da kontrastbeeinflussende Maßnahmen lediglich in tieffrequenten Bilddetails zweckmäßig sind. Die Laufzeit des Tiefpaßgliedes 6 ist der des Coders 1 angepaßt, so daß auf eine separate Laufzeitanpassung verzichtet werden kann. Danach wird das bandbegrenzte Signal einer nichtlinearen Verstärkerstufe 7 zugeführt, in welcher eine sogen. « Schwarzdehnung » des Signals erfolgt. Am Ausgang dieser Stufe 7 ist dann ein Signal gemäß d (Fig. 3) abnehmbar. Der nichtlinearen Verstärkerstufe 8, welche ebenso aufgebaut ist wie die Stufe 7, wird das Austastsignal A zugeführt. An beiden Stufen 7 und 8 werden neben Klemmimpulsen KI auch eine Steuerspannung $U_{St}$ zugeführt. Am Ausgang der Stufe 8 ist dann ein Signal gemäß e (Fig. 3) abnehmbar. Die Signale d und e werden nun den Steuereingängen einer Multiplizierstufe 9 zugeleitet, an deren weiterem Eingang das vom Coder 1 abgegebene Signal b liegt. Das am Ausgang der Multiplizierstufe 9 abnehmbare Kontrastkorrektursignal f muß in der Austastlücke als auch im 100 %-Weißpunkt zu Null werden. Dies kann erreicht werden durch Differenzbildung der Signale d und e, welche in der Multiplizierstufe 9 erfolgt. Das Signal f wird dann dem zweiten Eingang der Addierstufe 2 zugeführt und dem nichtkorrigierten Signal b zugesetzt, so daß am Ausgang der Stufe 2 ein kontrastkorrigiertes Signal g abnehmbar ist.

In Fig. 2 ist eine Kontrastkorrektur-Schaltung für Farbfernsehsignale nach der SECAM-Norm dargestellt, wobei an den Eingangsklemmen 11 und 12 das von einer in der Fig. nicht dargestellten Matrix erzeugte Luminanzsignal Y und das zeilensequentielle Farbdifferenzsignal $D_B/D_R$ anliegen. Diese Signale mit der Form b werden nun den ersten Eingängen je einer Addierstufe 13 und 14 zugeführt. Hierbei ist ebenfalls eine Signalverarbeitungsschaltung 4 wie in Fig. 1 vorgesehen, an deren Eingängen das Signal X der Nicht-Additiven-Mischschaltung 3, Klemmimpulse KI, das Austastsignal A sowie die Steuerspannung $U_{St}$ anliegen. An deren Ausgang sind ebenfalls die Signale d und e abnehmbar, welche je einer Multiplizierstufe 16 und 17 zugeführt werden. Dem anderen Eingang der Multiplizierstufe 16 wird das Luminanzsignal und dem anderen Eingang der Multiplizierstufe 17 das zeilensequentielle Farbdifferenzsignal $D_B/D_R$ zugeführt. An den Ausgängen der Stufen 16 und 17 sind Signale gemäß f der Fig. 3 abnehmbar. Diese Signale f werden nun jeweils dem zweiten Eingang der Addierstufe 13 und 14 zugeführt. Das Ausgangssignal der Stufe 14 wird weiterhin einem Frequenzmodulator 18 zugeleitet, an dessen Ausgang dann das frequenzmodulierte Farbdifferenzsignal abnehmbar ist. Dieses Signal sowie das Ausgangssignal der Stufe 13 werden nun in einer weiteren Addierstufe 19 zusammengesetzt, so daß am Ausgang der Stufe 19 ein kontrastkorrigiertes Farbfernsehsignal gemäß der SECAM-Norm abnehmbar ist.

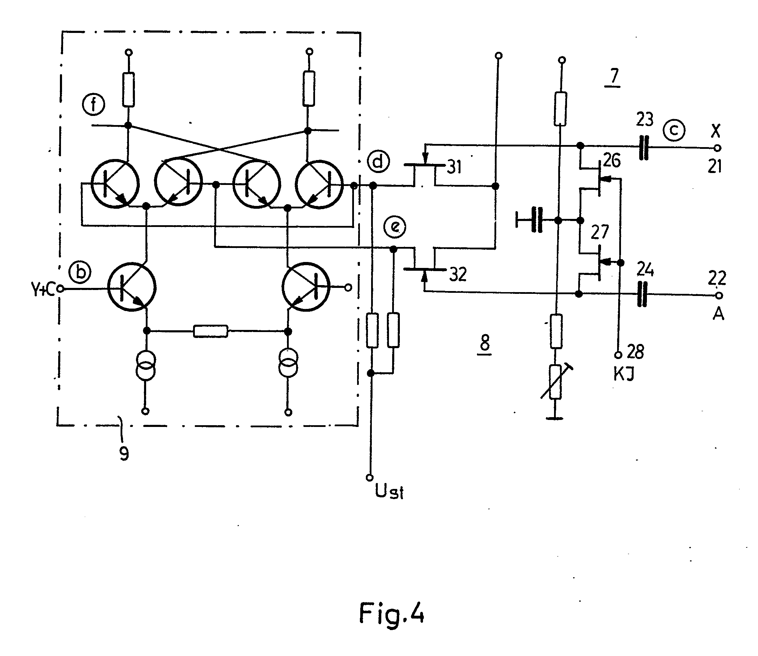

In Fig. 4 sind die nichtlinearen Verstärker 7 und 8 sowie die Multiplizierstufe 9 im Detail dargestellt. An den Klemmen 21 bzw. 22 der Stufen 7 bzw. 8 liegt das Ausgangssignal X der Schaltung 3 bzw. das Austastsignal A. Beide Signale werden über je einen Kondensator 23 bzw. 24 je einer Klemmschaltung mit einem Feldeffekttransistor 26 bzw. 27 zugeführt. Die Feldeffekttransistoren 26 und 27 werden mit Klemmimpulsen KI von der Klemme 28 gesteuert. Das geklemmte Signal X wird nun einem als spannungsabhängigen Widerstand wirkenden weiteren Feldeffekttransistor 31 zugeführt, während das ebenfalls geklemmte Austastsignal einem Feldeffekttransistor 32 zugeführt wird. Liegt beispielsweise an der Gate-Elektrode des FET 31 eine sägezahnförmige Spannung, so wird der FET mit steigender Gate-Source-Spannung immer niederohmiger. Dadurch entsteht an der Drain-Elektrode ein Signal gemäß d in Fig. 3. Die Polarität und die Größe dieser Signalspannung ist mit der Steuerspannung $U_{St}$ frei wählbar. Das Austastsignal A durchläuft eine ebensolche Schaltung wie das Signal X. Die dadurch gleichbehandelten Signale d und e werden dem positiven sowie negativen Steuereingang der Multiplizierstufe 9 zugeführt, wodurch eine Differenz zwischen den Signalen d und e gebildet wird. Durch diese Differenzbildung wird erreicht, daß das Korrektursignal f im Schwarzen wie im Weißen zu Null wird. Durch diese Schaltung ist auch sichergestellt, daß sowohl der Luminanzanteil Y als auch der Chrominanzanteil C des codierten Signals gleichermaßen bewertet wird. Dadurch ergeben sich keinerlei Sättigungsänderungen, die bei normaler Schwarzdehnung sehr nachteilig in Erscheinung treten.

## Ansprüche

1. Verfahren zur Kontrastkorrektur von Farbfernsehsignalen (b), bei welchem zu den, einer bestimmten Farbfernsehnorm gemäß behandelten Videosignalen, ein Kontrastkorrektursignal (f) addiert wird, wobei von den unbehandelten Farbauszugssignalen (R, G, B) mittels nichtadditiver Mischung (NAM) ein der jeweils größten Amplitude entsprechendes Steuersignal (c) abgeleitet wird, welches nach Differenzbildung mit einem vorgegebenen, einer 100 %-Weißamplitude entsprechenden Amplitudenpegel (e) mit dem behandelten Videosignal (b) multipliziert wird, und dieses Produktsignal als Kontrastkorrektursignal (f) zu dem behandelten Videosignal (b) addiert wird, dadurch gekennzeichnet, daß das Steuersignal (c) auf den unteren Frequenzbereich (TP) bandbegrenzt wird, daß der den dunkleren Bildteilen entsprechende Amplitudenbereich des Steuersignales (c) vor der Multiplikation (9) angehoben wird, daß von dem so verarbeiteten Steuersignal (d) ein ebenso verarbeitetes Austastsignal (e) abgezogen wird, und daß das so gebildete Differenzsignal mit dem behandelten Videosignal (b) multipliziert wird, so daß nach der Multiplikation ein Kontrastkorrektursignal (f) für verstärkte Schwarzdehnung in den dunkleren Bildbereichen erhalten wird, das in der Austastlücke und im 100 % Weißpunkt Null ist.

2. Verfahren zur Kontrastkorrektur von Farbfernsehsignalen der PAL- bzw. NTSC-Norm nach Anspruch 1, dadurch gekennzeichnet, daß die den verschiedenen Grundfarben einer abgetasteten Szene zugeordneten Farbauszugssignale (R, G, B) einerseits einem Farbcoder (1) zur Erzeugung eines der Fernsehnorm entsprechenden Farbfernsehsignals (b) und andererseits einer Nicht-Additiven-Mischschaltung (3) zur Erzeugung des Steuersignals (c) zugeführt werden.

3. Verfahren zur Kontrastkorrektur von Farbfernsehsignalen der SECAM-Norm nach Anspruch 1, dadurch gekennzeichnet, daß die den verschiedenen Grundfarben einer abgetasteten Szene zugeordneten Farbauszugssignale einerseits einer Matrix zur Erzeugung des Luminanzsignals (Y) und des zeilensequentiell geschalteten Farbdifferenzsignals ($D_B/D_R$) und andererseits einer Nicht-Additiven-Mischschaltung zur Erzeugung des Steuersignals (c) zugeführt werden, daß das zeilensequentielle Farbdifferenzsignal ($D_B/D_R$) nach der Kontrastkorrektur frequenzmoduliert wird (FM) und danach zu dem kontrastkorrigierten Luminanzsignal (Y) addiert wird.

4. Schaltung zur Durchführung des Verfahrens nach Anspruch 1 und 2, dadurch gekennzeichnet, daß der Ausgang des Farbcoders (1) mit dem ersten Eingang einer Addierstufe (2) verbunden ist, daß der Ausgang der Nicht-Additiven-Mischschaltung (3) über ein Tiefpaßglied (6) mit dem ersten Eingang einer ersten nichtlinearen Verstärkerstufe (7) verbunden ist, an deren zweiten Eingang Klemmimpulse (KI) anliegen, daß der Ausgang der ersten nichtlinearen Verstärkerstufe (7) an den ersten Steuereingang einer Multiplizierstufe (9) angeschlossen ist, an deren zweiten Steuereingang der Ausgang einer zweiten nichtlinearen Verstärkerstufe (8) angeschlossen ist, welche vom Austastsignal (A) und den Klemmimpulsen (KI) gespeist wird, daß beiden Verstärkerstufen (7, 8) eine gemeinsame Steuerspannung ($U_{St}$) zugeführt ist, daß einem dritten Eingang der Multiplizierstufe (9) das codierte Farbsignal zugeführt ist und daß der Ausgang der Multiplizierstufe (9) mit dem zweiten Eingang der Addierstufe (2) verbunden ist, an deren Ausgang das kontrastkorrigierte Farbsignal abnehmbar ist.

5. Schaltung zur Durchführung des Verfahrens nach Anspruch 1 und 3, dadurch gekennzeichnet, daß der Luminanzsignalausgang bzw. der Farbdifferenzsignalausgang der Matrix an den ersten Eingang einer ersten (13) bzw. einer zweiten Addierstufe (14) angeschlossen ist, daß der Ausgang der Nicht-Additiven-Mischschaltung über ein Tiefpaßglied (6) mit dem ersten Eingang einer ersten nichtlinearen Verstärkerstufe (7) verbunden ist, an deren zweiten Eingang Klemmimpulse anliegen, daß der Ausgang der ersten nichtlinearen Verstärkerstufe (7) an den ersten Steuereingang einer ersten (16) und einer zweiten Multiplizierstufe (17) angeschlossen ist, an deren zweiten Steuereingängen der Ausgang einer zweiten nichtlinearen Verstärkerstufe (8) angeschlossen ist, welcher vom Austastsignal und den Klemmimpulsen gespeist wird, daß beiden Verstärkerstufen (7, 8) eine gemeinsame Steuerspannung zugeführt wird, daß einem dritten Eingang der Multiplizierstufen (16, 17) das Luminanzsignal bzw. die Farbdifferenzsignale zugeführt sind, und daß der Ausgang der Multiplizierstufen (16, 17) mit dem zweiten Eingang der ersten (13) bzw. zweiten Addierstufe (14) verbunden ist, daß der Ausgang der ersten Addierstufe (13) mit dem ersten Eingang einer dritten Addierstufe (19) und der Ausgang der zweiten Addierstufe (14) über einen Frequenzmodulator (18) mit dem zweiten Eingang der dritten Addierstufe (19) verbunden ist, an deren Ausgang das kontrastkorrigierte Farbfernsehsignal abnehmbar ist.

6. Schaltung nach Anspruch 4 oder 5, dadurch gekennzeichnet, daß die nichtlinearen Verstärkerstufen (7, 8) je eine Klemmschaltung (26, 27) und ein spannungsabhängiges Übertragungsglied (31, 32), insbesondere einen Feldeffekttransistor, enthalten.

**Claims**

1. Method for the correction of contrast of colour television signals (b), in which there is added a contrast correction signal (f) to the video signals which have been treated according to a certain colour television standard, wherein a control signal (c) is derived corresponding to the greatest amplitude at any particular time from the untreated primary colour signals (R, G, B) by means of non-additive mixing (NAM), which is multiplied with the treated video signal (b) after difference formation with a predetermined amplitude level (e) corresponding to a 100 % white amplitude, and this product signal is added as a contrast correction signal (f) to the treated video signal (b), characterized in that the control signal (c) is band limited to the lower frequency range (TP), in that the amplitude range of the control signal (c) corresponding to the darker picture portions is raised before multiplication (a) in that from the thus modified control signal (d) a similarly modified blanking signal (e) is subtracted, and in that the difference signal so formed is multiplied with the treated video signal (b), so that after multiplication a contrast correction signal (f) for amplified black stretch is retained in the darker picture portions, which is zero in the blanking interval and in the 100 % achromatic point.

2. Method for contrast correction of colour television signals of the PAL or NTSC standard according to Claim 1, characterized in that the primary colour signals (R, G, B) allocated to the different primary colours of a scanned scene on the one hand are supplied to a colour encoder (1) for the generation of a colour television signal (b) corresponding to the television standard and on the other hand are supplied to a non-additive mixer circuit (3) for the generation of the control signal (c).

3. Method for the contrast correction of colour television signals of the SECAM standard according to Claim 1, characterized in that the different primary colour signals allocated to a scanned scene are on the one hand supplied to a matrix for the generation of the luminance signal (Y) and the line sequentially switched colour difference signal ($D_B/D_R$) and on the other hand are supplied to a non-additive mixing circuit for the generation of the control signal (c), in that the line sequential colour difference signal ($D_B/D_R$) is frequency modulated (FM) after contrast correction and after that is added to the contrast corrected luminance signal (Y).

4. A circuit arrangement for carrying out the method according to Claims 1 and 2, characterized in that the output of the colour encoder (1) is connected to the first input of an adder (2), that the output of the non-additive mixer circuit (3) is connected to the first input of a first non-linear amplifying stage (7) over a low-pass filter member (6), at the second input of which clamping pulses (KI) are applied, in that the output of the first non-linear amplifier stage (7) is connected to the first control input of a multiplier stage (9), to the second input of which the output of a second non-linear amplifier stage (8) is connected, which is supplied by the scanning signal (A) and the clamping pulses (KI), in that a common control voltage ($U_{St}$) is supplied to both amplifier stages (7, 8), in that the encoded colour signal is supplied to a third input of the multiplier stage (9) and in that the output of the multiplier stage (9) is connected to the second input of the adder stage (2), at the output of which the contrast corrected colour signal may be taken off.

5. A circuit arrangement for carrying out the method according to Claims 1 and 3, characterized in that the luminance signal output or the colour difference signal output of the matrix is connected to the first input of a first (13) or a second adder stage (14), in that the output of the non-additive mixer circuit is connected over a low-pass member (6) to the first input of a first non-linear amplifier (7) at the second input of which clamping pulses (KI) are applied, in that the output of the first non-linear amplifier stage (7) is connected to the first control input of a first (16) and of a second multiplier stage (17), at the second control inputs of which the output of a second non-linear amplifier stage (8) is connected, which is supplied with the blanking signal and the clamping pulses, in that a common control voltage is applied to both amplifier stages (7, 8), in that the luminance signal and the colour difference signals are supplied to a third input of the multiplier stages (16, 17), and in that the output of the multiplier stages (16, 17) is connected to the second input of the first (13) and second adder stage (14), in that the output of the first adder stage (13) is connected to the first input of a third adder stage (19) and the output of the second adder stage (14) is connected over a frequency modulator (18) to the second input of the third adder stage (19), at the output of which the contrast corrected colour television signal may be taken off.

6. A circuit arrangement according to Claims 4 or 5, characterized in that the non-linear amplifier stages (7, 8) each comprise a clamping circuit (26, 27) and a voltage-dependent transmission member (31, 32) particularly a field-effect transistor.

**Revendications**

1. Procédé pour la correction de contraste de signaux de télévision en couleur (b) dans lequel, aux signaux vidéo traités conformément à une norme de télévision en couleur déterminée, est ajouté un signal de correction de contraste (f), auquel cas, on dérive, des signaux de télévision en couleur non traités (R G B), au moyen d'un mixage sans addition (NAM), un signal de commande (c) correspondant chaque fois à l'amplitude maximale, lequel, après formation de différence, est multiplié, avec un seuil d'amplitude prédéterminée (e), correspondant à une amplitude de blanc 100 %, par le signal vidéo traité (b), ce signal de produit étant additionné, comme signal de correction de contraste (f) au signal vidéo traité (b), procédé caractérisé en ce que le signal de commande (c) est limité de bande au domaine de fréquence inférieur (TP), le domaine d'amplitude du signal de commande correspondant aux parties d'image les plus sombres étant supprimé avant la multiplication (9), un signal d'exploration également traité (e) étant soustrait du signal de commande traité (d), et le signal de différence ainsi formé étant multiplié par le signal vidéo traité, de telle sorte que, après la multiplication, soit obtenu un signal de correction de contraste (f) pour l'extension de noir renforcée dans les plus sombres de l'image, ce signal étant nul dans les intervalles d'exploration et dans le point 100 % blanc.

2. Procédé pour la correction de contraste de signaux de télévision de système normalisé PAL ainsi que NTSC, suivant la revendication 1, caractérisé en ce que les signaux composants de couleur (R G B) affectés aux différentes couleurs de base d'une scène explorée, sont amenés, d'une part, à un codeur de couleur (1) pour la production d'un signal de télévision en couleur correspondant à l'un des systèmes normalisé de télévision, et, d'autre part, à un montage de mixage non additif (3) pour la production du signal de commande (c).

3. Procédé pour la correction de contraste de signaux de télévision normalisé SECAM suivant la revendication 1, caractérisé en ce que les signaux composants de couleur affectés aux différentes couleurs de base d'une scène explorée, sont amenés, d'une part, à une matrice pour la production d'un signal de luminance (Y) et du signal de différence de couleur séquentiel par lignes ($D_B/D_R$), et, d'autre part, à un montage de mixage non additif pour la production du signal de commande (c), le signal de différence de couleur séquentiel ($D_B/D_R$) étant modulé en fréquence (FM) après la correction de contraste et ensuite additionné avec le signal de luminance corrigé de contraste (Y).

4. Installation pour l'application du procédé suivant l'une des revendications 1 et 2, caractérisée en ce que la sortie du codeur de couleur (1) est reliée à la première entrée d'un étage addition (2), la sortie du montage de mixage non additif (3) étant reliée, à travers un organe passe-bas (6) à la première entrée d'un premier étage amplificateur non linéaire (7) à la seconde entrée duquel sont appliquées des impulsions de borne (KI), la sortie du premier amplificateur non linéaire (7) étant raccordée à la première entrée de commande d'un étage multiplicateur (9), à la seconde entrée de commande duquel est raccordée la sortie d'un second étage amplificateur non linéaire (8) lequel est alimenté avec le signal d'exploration (A) et les impulsions de borne (KI), une tension de commande commune ($U_{St}$) étant amenée aux deux étages amplificateurs (7, 8), le signal de couleur codé étant amené à une troisième entrée de l'étage multiplicateur (9) et la sortie de cet étage multiplicateur étant reliée avec la seconde entrée de l'étage d'addition (2), à la sortie duquel peut être prélevé le signal de couleur corrigé de contraste.

5. Installation pour l'application du procédé suivant l'une quelconque des revendications 1 à 3, caractérisée en ce que la sortie de signal de luminance ainsi que la sortie de signal de différence de couleur de la matrice sont raccordées à la première entrée d'un premier (13) ainsi que d'un second étage d'addition (14), la sortie du montage de mixage non additif étant reliée, à travers un organe passe-bas (6) avec la première entrée d'un premier étage amplificateur non linéaire (7), à la seconde entrée duquel sont appliquées des impulsions de borne, et dont la sortie est raccordée à la première entrée de commande d'un premier (16) et d'un second étages multiplicateurs (17), aux secondes entrées de commande desquels est raccordée la sortie d'un second amplificateur non linéaire (8), qui est alimenté par le signal d'exploration et les impulsions de borne, une tension de commande commune étant amenée à chacun des étages amplificateurs (7, 8), le signal de luminance ainsi que les signaux de différence de couleur étant amenés à une troisième entrée des étages multiplicateurs (16, 17), dont la sortie est reliée à la seconde entrée du premier (13) et du second étage d'addition (14), la sortie du premier étage d'addition (13) étant reliée à l'entrée d'un troisième étage d'addition (19), la sortie du second étage d'addition (14) étant reliée, à travers un modulateur de fréquence (18) à la seconde entrée du troisième étage d'addition (19) à la sortie duquel peut être prélevé le signal de télévision en couleur corrigé de contraste.

6. Installation suivant l'une des revendications 4 ou 5, caractérisée en ce que les étages amplificateurs non linéaires (7, 8) contiennent chacun un montage de borne (26, 27) et un organe de transmission dépendant de la tension (31, 32), notamment un transistor à effet de champ.

Fig.1

Fig.2

Fig. 3

0 019 735

2

Fig.4